# EUROPÄISCHE PATENTSCHRIFT

(11) **EP 2 696 050 B1**
(45) Veröffentlichungstag und Bekanntmachung des Hinweises auf die Patenterteilung: **27.11.2024**
(21) Anmeldenummer: 13175584.5
(22) Anmeldetag: 08.07.2013
(51) Int. Cl.: F01N 13/18, F01N 3/20, B01D 49/00, F16L 27/111

(54) **Abgasanlage für einen Verbrennungsmotors**
Exhaust system for a combustion engine
Système de gaz d'échappement pour un moteur à combustion

(30) Priorität: 10.08.2012 DE 102012214288
(43) Veröffentlichungstag der Anmeldung: 12.02.2014
(73) Patentinhaber: Witzenmann GmbH, 75175 Pforzheim (DE); Purem GmbH, 66539 Neunkirchen (DE)
(72) Erfinder: Ludwig, Jörg, 75177 Pforzheim (DE); Barthold, Jens, 75175 Pforzheim (DE); Berson, Frank, 75210 Keltern (DE); Rösler, René, 76137 Karlsruhe (DE); Calvo, Silvia, 73730 Esslingen (DE); Dr. Többen, Heike, 73066 Uhingen (DE)
(74) Vertreter: LBP Lemcke, Brommer & Partner Patentanwälte mbB

(56) Entgegenhaltungen:
- WO-A1-2012/089290
- DE-A1- 102010 037 162
- DE-A1- 102011 015 772
- DE-A1- 102011 112 988
- GB-A- 2 318 802
- US-A1- 2009 084 094

## Beschreibung

Die Erfindung betrifft eine Abgasanlage eines Verbrennungsmotors nach dem Oberbegriff des Anspruchs 1, enthaltend ein flexibles Leitungselement mit einem ringgewellten oder schraubengangförmig gewellten Metallbalg, der von einem Abgasstrom des Verbrennungsmotors durchströmbar ist. Stromaufwärts des Metallbalgs ist ein Leitungsabschnitt angeordnet, der ebenfalls flexibel oder unflexibel, beispielsweise als Glattrohr ausgebildet ist. Stromaufwärts eines SCR-Katalysators ist eine Einrichtung zum Eindüsen des für den SCR-Katalysator notwendigen Harnstoffs vorgesehen.

Flexible Leitungselemente werden in die Rohrleitungen von Abgasanlagen der vorliegenden Art eingebaut, um Bewegungen der mit dem Verbrennungsmotor fest verbundenen Abgasleitungen von den weiteren Teilen der Abgasanlage fernzuhalten, da diese in der Regel fest mit einem Fahrzeug, in dem der Verbrennungsmotor eingebaut ist, verbunden sind.

Ein Metallbalg ist in der Lage, axiale, laterale und angulare Bewegungen aufzunehmen, die durch temperaturbedingte Längenänderungen, Lastwechselbewegungen des Verbrennungsmotors sowie, bei Fahrzeugen, Erschütterungen im Fahrbetrieb und dergleichen erzeugt werden. Des Weiteren werden Schwingungen unterschiedlichster Frequenzen, die im Verbrennungsmotor durch die sich bewegenden Teile und durch pulsierende Gasströme entstehen, vom Metallbalg aufgenommen und, soweit dessen Eigenschwingungen ausreichend bedämpft sind, nicht an die weiterführenden Teile der Abgasanlage weitergeleitet. Dies verhindert, dass die Schwingungen des Verbrennungsmotors von der Abgasanlage als Körperschall abgestrahlt werden oder an eine Fahrzeugkarosserie weitergeleitet werden, was unerwünschte Brummgeräusche im Innern des Fahrzeugs verursachen würde.

Flexible Leitungselemente in Abgasanlagen der vorliegenden Art sind durch den verwendeten Metallbalg absolut oder praktisch fluiddicht, je nachdem, ob dieser durch Umformen aus einem Rohr oder durch Wickeln eines Metallprofils hergestellt worden ist. Der Metallbalg kann ein- oder mehrwandig ausgebildet sein, wobei bei mehrwandiger Ausbildung die einzelnen Wandlagen beispielsweise im Hinblick auf Korrosionsbelastungen aus unterschiedlichen Materialien bestehen können.

Ein flexibles Leitungselement in Abgasanlagen der vorliegenden Art umfasst meist zusätzlich zum Metallbalg einen koaxial im Inneren desselben angeordneten Metallschlauch. Dieser dient der Strömungsführung des Abgasstroms. Hierdurch wird gewährleistet, dass die thermische Belastung des Metallbalgs durch den heißen Abgasstrom nicht allzu hoch wird. Darüber hinaus werden Verwirbelungen des Abgasstroms in den Wellungen des Metallbalgs verhindert, welche zum einen den Strömungswiderstand erhöhen und zum anderen erhebliche Geräusche verursachen können.

Ein solcher Metallschlauch ist üblicherweise ein Wickelschlauch aus zu Agraffen gefalzten Metallprofilen oder aus Hakenprofilen, was die erforderliche Beweglichkeit gewährleistet und darüber hinaus aufgrund der inneren Reibung der Profile gegeneinander schwingungsdämpfend wirkt. Bei Bedarf kann die schwingungsdämpfende Wirkung des Metallschlauchs durch zusätzliche schwingungsdämpfende Bauteile, wie beispielsweise einen außen über den Metallbalg gezogenen oder zwischen dem Metallbalg und dem Metallschlauch angeordneten Gestrickeschlauch verstärkt werden. Beispiele solcher flexibler Leitungselemente mit Metallbalg, Metallschlauch und Gestrickeschlauch finden sich in der EP 0 875 669 A2 und der DE 196 41 963 C1.

Flexible Leitungselemente in Abgasanlagen der vorliegenden Art, insbesondere mit zusätzlich vorgesehenen Metallschläuchen und dämpfenden Elementen, werden insbesondere in Kraftfahrzeugen seit Jahren erfolgreich eingesetzt. Dort werden sie sinnvollerweise motornah, zwischen Abgaskrümmer und Katalysator eingebaut, denn je näher das flexible Leitungselement an der Motordrehachse angeordnet ist, um so geringere Relativbewegungen muss es durch Verformung ausgleichen. Ein motornaher Einbauort ermöglicht demnach vorteilhaft kurze Metallbälge der flexiblen Leitungselemente. Je nach den örtlichen Gegebenheiten des Einbauorts ist ihr Querschnitt entweder im Wesentlichen zylindrisch, oder aber oval oder stadionförmig abgeflacht ausgebildet.

Zur Verringerung von Stickoxidemissionen von Verbrennungsmotoren, insbesondere von in Fahrzeugen eingesetzten Dieselmotoren, werden in Abgasanlagen der vorliegenden Art SCR-Katalysatoren (Seletive Catalytic Reduction Katalysatoren) eingesetzt. Im Betrieb benötigt ein solcher SCR-Katalysator Ammoniak als Reduktionsmittel für die Stickoxide (NOₓ). Der benötigte Ammoniak wird aus Harnstoff gebildet, welcher in flüssiger Form stromaufwärts des SCR-Katalysators in den heißen Abgasstrom eingedüst wird. Bei ungünstigen Randbedingungen (insbesondere bei zu niedrigen Abgastemperaturen, geringen Strömungsgeschwindigkeiten, schlechter Vermischung des Harnstoffs mit dem Abgasstrom, Harnstoffüberdosierung etc.) bilden sich insbesondere in den kältesten Wandbereichen des Abgasstroms Harnstoffderivate. Diese sind Grundbestandteile für die Bildung von HWL-Ablagerungen. Sobald diese Grundbestandteile bzw. Harnstoffderivate in Kontakt mit einer Wandung des Leitungselements kommen, können Ablagerungen oder zähflüssige Wandfilme entstehen. Dies ist direkt abhängig von der HWL-Aufbereitung vor dem SCR-Katalysator.

Nun ist es jedoch in vielen Fällen erwünscht oder sogar notwendig, ein flexibles Leitungsteil der vorliegenden Art stromaufwärts eines SCR-Katalysators in die Abgasanlage einzubauen, während gleichzeitig das Eindüsen des für den SCR-Katalysator notwendigen Harnstoffs noch stromaufwärts des flexiblen Leitungselements erfolgt. Dies kann dazu führen, dass nach längerer Betriebszeit störende Ablagerungen von Harnstoffderivaten im flexiblen Leitungselement entstehen.

Solche Ablagerungen sind vor allem dann sehr nachteilig, wenn sie in den Zwischenraum zwischen einem oft vorhandenen Metallschlauch und dem Metallbalg gelangen oder dort entstehen. Denn da der Metallschlauch den Abgasstrom führt, wird der Zwischenraum zwischen dem Metallschlauch und dem Metallbalg nicht so heiß, dass die Ablagerungen durch einen Regenerationsprozess oder während Betriebszuständen mit besonders heißem Abgasstrom wieder aufgelöst werden könnten. Die Harnstoffderivat-Ablagerungen sammeln sich daher mit der Zeit vornehmlich in diesem Zwischenraum an, bis sie ihn irgendwann vollständig zusetzen. Auch bei flexiblen Leitungselementen der vorliegenden Art, bei denen kein strömungsführendes Bauteil im Inneren des Metallbalgs vorgesehen ist, sind Harnstoffderivat-Ablagerungen nachteilig, da sie sich in den Wellungen des Metallbalgs festsetzen und dort vom heißen Abgasstrom nicht mehr aufgelöst werden, da das Innere der Wellungen in aller Regel deutlich weniger heiß ist als der Abgasstrom. Durch solche Ablagerungen leidet die Beweglichkeit des Metallbalgs und/oder des etwa vorhandenen Metallschlauchs, was die erwünschten Eigenschaften des flexiblen Leitungselements beeinträchtigt und bei entsprechender Beanspruchung sogar dazu führen kann, dass der Metallbalg beschädigt wird und das Leitungselement dann die erforderliche Fluiddichtheit nicht mehr aufweist.

In der DE 10 2011 015 772 A1 wurde vorgeschlagen, die oben geschilderte Problematik bei einer Abgasanlage der vorliegenden Art dadurch zu umgehen, dass ein zylindrisches Innenrohr koaxial innerhalb des Metallbalgs angeordnet wird und an seinem stromaufwärtigen Ende bewegliche Verschlussklappen angebracht werden, die den Ringraum zwischen dem Innenrohr und dem Metallbalg verschließen können. Im Teillastbetrieb des Verbrennungsmotors werden die Verschlussklappen in ihrer Verschlussstellung gehalten, sodass der gesamte Abgasstrom durch das Innenrohr fließt und insofern keinen Kontakt mit dem Metallbalg erhält. Wenn eine höhere Motorleistung abgerufen wird, werden die Verschlussklappen geöffnet, um einen maximalen Leitungsquerschnitt für den Abgasstrom bereitzustellen. Ein Steuergerät stellt hierbei sicher, dass die Verschlussklappen nur dann geöffnet werden, wenn die Temperatur des Abgasstroms einen Mindestwert überschreitet, um Ablagerungen im Metallbalg zu vermeiden.

Es liegt auf der Hand, dass das Vorsehen von beweglichen Verschlussklappen im Abgasstrom, in den bereits Harnstoff eingedüst wurde, und das Erfordernis eines Steuergeräts zur Kontrolle der Temperatur des Abgasstroms nicht von allen Abgasanlagenherstellern als optimale Lösung angesehen wird.

Der vorliegenden Erfindung liegt daher die Aufgabe zugrunde, eine Abgasanlage mit einem flexiblen Leitungselement der eingangs genannten Art auch ohne bewegliche Verschlussklappen so zu verbessern, dass die Problematik von Harnstoffderivat-Ablagerungen, die sich im Laufe der Zeit ansammeln und die Funktionsfähigkeit des flexiblen Leitungselements beeinträchtigen, beseitigt oder zumindest deutlich abgemildert ist.

Gelöst ist diese Aufgabe durch eine Abgasanlage mit den Merkmalen des Anspruchs 1. Bevorzugte Ausgestaltungen und Weiterbildungen der erfindungsgemäßen Abgasanlage finden sich in den Ansprüchen 2 bis 5.

Erfindungsgemäß ist also stromaufwärts des Metallbalgs, in dem dort angeordneten Leitungsabschnitt oder an diesem angebracht, mindestens eine Abscheideeinrichtung für Harnstoffderivate, die in einer Randschicht des Abgasstroms mitgeführt werden, und/oder für Harnstoff vorgesehen, mit dem die Randschicht des Abgasstroms gegebenenfalls übersättigt ist. Die Randschicht kann eine äußerste Grenzschicht zwischen dem Abgasstrom und den Wandungen des flexiblen Leitungselements sein, sie kann aber auch eine radial relativ weit ausgedehnte Randschicht sein, die einen zentralen Gasstromanteil des Abgasstroms umgibt. Dies beruht auf der Erkenntnis, dass nur die wandnahen Anteile des Abgasstroms, die Harnstoff oder Harnstoffderivate mitführen, hinsichtlich der zu vermeidenden Ablagerungen kritisch sind.

Die vorliegende Erfindung beruht auf der grundlegenden Erkenntnis, dass überschüssiger Harnstoff oder Harnstoffderivate, die aus einer Randschicht des Abgasstroms mittels einer Abscheideeinrichtung noch stromaufwärts des flexiblen Leitungselements bzw. dessen für die Flexibilität wesentlichen Teilen dem Abgasstrom entnommen werden, sich nicht mehr am Metallbalg oder sonstigen flexiblen Teilen ablagern können. Im Rahmen der vorliegenden Erfindung wird also nicht versucht, Harnstoffderivat-Ablagerungen im flexiblen Leitungselement in jedem Fall zu vermeiden, etwa durch aufwändige verbesserte Harnstoffeinspritzung oder zusätzliche Beheizung oder dergleichen, sondern es werden Harnstoffderivat-Ablagerungen, die ohne erheblichen Zusatzaufwand nicht vermieden werden können, nach vorne an einen Ort stromaufwärts des flexiblen Leitungselements oder jedenfalls stromaufwärts derjenigen Teile des flexiblen Leitungselements, die im Betrieb dessen flexiblen Bereich bilden, verlegt.

Bei der erfindungsgemäßen Abscheideeinrichtung handelt es sich also um eine Art Harnstofffalle. Diese kann im Rahmen der vorliegenden Erfindung ganz unterschiedlich ausgebildet sein. Diesen unterschiedlichen Ausbildungen gemeinsam ist jedoch immer, dass Harnstoffderivate aus einem Randbereich des Abgasstroms oder gegebenenfalls bereits erfolgte Harnstoff- und Harnstoffderivat-Ablagerungen, was auch einen zähflüssigen Ablagerungsfilm an den Leitungswänden einschließt, vor den im Betrieb flexiblen Bereichen des flexiblen Leitungselements abgefangen und deponiert werden, bis sie bei besseren Betriebsbedingungen des Verbrennungsmotors vom dann genügend heißen Abgasstrom, oder aber während einer Regenerierphase eines etwa stromaufwärts angeordneten Partikelfilters durch entsprechend hohe Temperaturen wieder aufgelöst werden. Die erfindungsgemäße Abscheideeinrichtung kann als Sammeleinrichtung für Harnstoffderivat-Ablagerungen ausgebildet sein. In dieser Sammeleinrichtung können sich dann Ablagerungen, die nicht mehr aufgelöst werden können, dauerhaft ansammeln, wobei die Kapazität dieser Sammeleinrichtung zweckmäßigerweise so gewählt ist, dass sämtliche abgeschiedenen Ablagerungen, die während der Lebensdauer des flexiblen Leitungselements anfallen, gesammelt werden können.

Die erfindungsgemäße Abscheideeinrichtung ist als Strömungshindernis für die interessierende Randschicht des Abgasstroms asugebildet. Dieses Strömungshindernis ist ein randseitig in den Abgasstrom hineinragendes Element, und zwar ein Prallblech, das ringförmig oder in Ringabschnitten am stromaufwärts des Metallbalgs angeordneten Leitungsabschnitt direkt oder indirekt angebracht ist. Dieses Prallblech ist mit einer Strömungsabrisskante versehen. An solch einem Strömungshindernis lagern sich die in der entsprechenden Randschicht des Abgasstroms mitgeführten Harnstoffderivate bevorzugt ab. Auch wenn sich noch keine Harnstoffderivate gebildet haben, sondern die interessierende Randschicht des Abgasstroms lediglich mit Harnstoff übersättigt ist, wird letzterer an einem Strömungshindernis kondensieren, so dass er stromabwärts im flexiblen Bereich des flexiblen Leitungselements keine Derivat-Ablagerungen mehr bilden kann.

Die erfindungsgemäße Abscheideeinrichtung kann zumindest zum Teil als filterartige Struktur mit großer Oberfläche und/oder mit Öffnungen oder Kanälen zur Aufnahme von Harnstoffderivaten ausgebildet sein. Eine solche filterartige Struktur kann beispielsweise durch mindestens einen Drahtpressring oder durch mindestens ein Drahtkissen gebildet sein. Drahtpressringe und Drahtkissen haben den Vorteil, dass sie problemlos im heißen Abgasstrom eines Verbrennungsmotors eingesetzt werden können und keinerlei Materialunverträglichkeiten mit dem Metallbalg des flexiblen Leitungselements zu befürchten sind. Ein Drahtpressring oder ein Drahtkissen wird bereits aufgrund seiner großen Oberfläche und seiner thermischen Effekte (zwischen den im Inneren eines Drahtpressrings bzw. Drahtkissens befindlichen Volumina und dem Abgasstrom gibt es Temperaturunterschiede) als effiziente erfindungsgemäße Harnstofffalle fungieren.

Die filterartige Struktur kann zusammen mit dem Prallblech für ein sicheres Zurückhalten von Harnstoffderivaten dienen, bis diese vom heißen Abgasstrom wieder aufgelöst werden.

Ausführungsbeispiele für ein erfindungsgemäß ausgestaltetes flexibles Leitungselement sind in den beigefügten Zeichnungen dargestellt und werden nachfolgend beschrieben. Es zeigen:
- Figur 1: eine schematische seitliche Schnittdarstellung einer ersten Ausführungsform einer Abscheideeinrichtung
- Figur 2: eine seitliche schematische Schnittdarstellung einer weiteren Ausführungsform einer Abscheideeinrichtung;

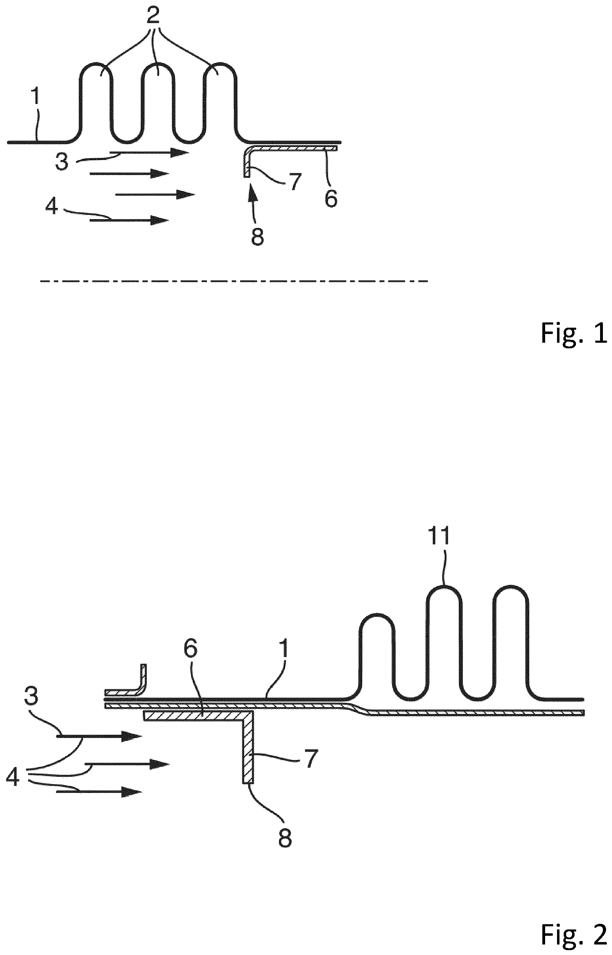

Figur 1 zeigt in einer schematischen seitlichen Schnittdarstellung eine erste Ausführungsform für eine erfindungsgemäß ausgestaltete Abscheideeinrichtung. Es handelt sich hier um einen kurzen, ringgewellten Metallbalg mit drei Wellungen und hoher Steifigkeit, der den stromaufwärts des (hier nicht dargestellten) eigentlichen Metallbalgs des flexiblen Leitungselements angeordneten Leitungsabschnitt 1 bildet. Die drei Wellungen bilden Vertiefungen 2, die aufgrund von Verwirbelungseffekten und einem thermischen Effekt (die Wellungen sind kühler als die daran angrenzenden, mit dem heißen Abgasstrom durchströmten Rohrwandungen) als Harnstofffalle dienen, also Harnstoffderivate und Überschuss-Harnstoff aus einer Randschicht 3 des Abgasstroms 4 abfangen können. Die entstehenden Harnstoffderivat-Ablagerungen sammeln sich im Innenraum der Wellungen 2. Diese haben ein Volumen, das sämtliche Harnstoffderivat-Ablagerungen, die während der Lebensdauer des flexiblen Leitungselements anfallen, aufnehmen können. Die Wellungen 2 können also als Sammeleinrichtung für Harnstoffderivat-Ablagerungen dienen.

Stromabwärts der Wellungen 2 ist ein erfindungsgemäßes Strömungshindernis 6, nämlich ein randseitig in den Abgasstrom 4 hinein ragendes, radial abgekantetes Prallblech 7 vorgesehen, das eine Strömungsabrisskante 8 aufweist.

Figur 2 zeigt eine weitere Variation einer erfindungsgemäßen Abscheideeinrichtung: Hier ist an dem stromaufwärts des Metallbalgs 11 angeordneten Leitungsabschnitt 1 ein Prallblech 7 mit Strömungsabrisskante 8 angeordnet. Es handelt sich also um einen radial nach innen abgekanteten Ring, der ein Strömungshindernis 6 für die interessierende Randschicht 3 des Abgasstroms 4 bildet. Die Harnstoffderivate werden am Prallblech 7 abgeschieden, wobei dies wegen der Strömungsabrisskante 8 bevorzugt an der stromabwärtigen Seite des Prallblechs 7 der Fall ist. Die Harnstoffderivate sammeln sich also im "Schatten" des Prallblechs 7 an und können dort gegebenenfalls durch Regenerieren wieder beseitigt werden.

Allen Ausführungsbeispielen gemeinsam ist, dass die Abscheideeinrichtungen nicht rotationssymmetrisch um die Achse des Leitungselements ausgebildet sein müssen. Sie können vielmehr auch abschnittsweise, beispielsweise umfangsverteilt angeordnet sein.

## Patentansprüche

1. Abgasanlage für einen Verbrennungsmotor, enthaltend ein stromaufwärts eines SCR-Katalysators angeordnetes, flexibles Leitungselement mit einem ringgewellten oder schraubengangförmig gewellten, von einem Abgasstrom (4) durchströmbaren Metallbalg (11) und einem stromaufwärts des Metallbalgs (11) angeordneten Leitungsabschnitt (1), sowie eine Einrichtung zum Eindüsen des für den SCR-Katalysator notwendigen Harnstoffs stromaufwärts des flexiblen Leitungselements,
**dadurch gekennzeichnet,**
**dass** im stromaufwärts des Metallbalgs (11) angeordneten Leitungsabschnitt (1) des flexiblen Leitungselements, oder an diesem angebracht, mindestens eine als Strömungshindernis (6) für die Randschicht (3) des Abgasstroms (4) ausgebildete Abscheideeinrichtung (2, 5, 6, 7, 9, 13, 14, 16, 17, 18) für in einer Randschicht (3) des Abgasstroms (4) mitgeführte Harnstoffderivate und/oder für Harnstoff aus einer mit diesem übersättigten Randschicht (3) des Abgasstroms (4) vorgesehen ist,
wobei das Strömungshindernis (6) als randseitig in den Abgasstrom (4) hineinragendes Element ausgebildet ist, das ringförmig oder in Ringabschnitten am stromaufwärts des Metallbalgs (11) angeordneten Leitungsabschnitt (1) direkt oder indirekt angebracht ist,
wobei das Strömungshindernis (6) als Prallblech ausgebildet ist, an dem Harnstoffderivate abgeschieden werden, und wobei das Prallblech mit mindestens einer Strömungsabrisskante (8) versehen ist, sodass Harnstoffderivate an der stromabwärtigen Seite des Prallblechs abgeschieden werden.

2. Abgasanlage nach Anspruch 1,
**dadurch gekennzeichnet,**
**dass** die Abscheideeinrichtung als Sammeleinrichtung für Harnstoffderivat-Ablagerungen ausgebildet ist oder eine solche enthält.

3. Abgasanlage nach einem der Ansprüche 1 oder 2,
**dadurch gekennzeichnet,**
**dass** die Abscheideeinrichtung eine filterartige Struktur mit großer Oberfläche und/oder mit Öffnungen oder Kanälen zur Aufnahme von Harnstoff und Harnstoffderivaten umfasst.

4. Abgasanlage nach Anspruch 3,
**dadurch gekennzeichnet,**
**dass** die filterartige Struktur durch mindestens einen Drahtpressring (9) oder mindestens ein Drahtkissen gebildet ist.

5. Abgasanlage nach einem der Ansprüche 3 oder 4,
**dadurch gekennzeichnet,**
**dass** das Strömungshindernis (6) mit der filterartigen Struktur (9) kombiniert ist.

## Claims

1. Exhaust system for an internal combustion engine, containing a flexible line element with an annular or helically corrugated metal bellows (11), through which an exhaust gas stream (4) can flow, arranged upstream of an SCR catalytic converter and a line section (1) arranged upstream of the metal bellows (11), as well as an apparatus for injecting the urea necessary for the SCR catalytic converter upstream of the flexible line element,
**characterised in that**
at least one separating apparatus (2, 5, 6, 7, 9, 13, 14, 16, 17, 18), which is designed as a flow obstacle (6) for the surface layer (3) of the exhaust gas stream (4), for urea derivatives transported in a surface layer (3) of the exhaust gas stream (4) and/or for urea from this supersaturated surface layer (3) of the exhaust gas stream (4) is provided in the line section (1) of the flexible line element arranged upstream of the metal bellows (11), or attached to the latter,
wherein the flow obstacle (6) is designed as an element projecting at the edge into the exhaust gas stream (4), which is directly or indirectly attached annularly or in annular sections to the line section (1) arranged upstream of the metal bellows (11),
wherein the flow obstacle (6) is designed as a baffle plate, at which the urea derivatives are separated, and wherein the baffle plate is provided with at least one flow separation edge (8), such that urea derivatives are separated at the downstream side of the baffle plate.

2. Exhaust system according to claim 1,
**characterised in that**
the separating apparatus is designed as a collecting apparatus for urea derivative deposits or contains such a collecting apparatus.

3. Exhaust system according to any one of claims 1 or 2,
**characterised in that**
the separating apparatus comprises a filter-type structure with a large surface and/or with openings or channels for receiving urea and urea derivatives.

4. Exhaust system according to claim 3,
**characterised in that**
the filter-type structure is formed by at least one wire press ring (9) or at least one wire cushion.

5. Exhaust system according to any one of claims 3 or 4,
**characterised in that**
the flow obstacle (6) is combined with the filter-type structure (9).

## Revendications

1. Système d'échappement pour un moteur à combustion contenant un élément conducteur flexible disposé en amont d'un catalyseur SCR avec un soufflet métallique (11) qui peut être traversé par un courant de gaz d'échappement (4), à ondulations annulaires ou hélicoïdales et une section de conduite (1) disposée en amont du soufflet métallique (11), ainsi qu'un dispositif destiné à l'injection de l'urée nécessaire au catalyseur SCR en amont de l'élément conducteur flexible,
**caractérisé en ce que**
dans la section de conduite (1) disposée en amont du soufflet métallique (11) de l'élément conducteur flexible, ou posée au niveau de celui-ci, au moins un dispositif de séparation (2, 5, 6, 7, 9, 13, 14, 16, 17, 18) réalisé en tant qu'obstacle à l'écoulement (6) pour la couche périphérique (3) du courant de gaz d'échappement (4) est prévu pour des dérivés d'urée emportés dans une couche périphérique (3) du courant de gaz d'échappement (4) et/ou pour de l'urée provenant d'une couche périphérique (3) saturée du courant de gaz d'échappement (4),
dans lequel l'obstacle à l'écoulement (6) est réalisé en tant qu'élément faisant saillie sur le bord dans le courant de gaz d'échappement (4) qui est posé directement ou indirectement de manière annulaire ou dans des sections annulaires au niveau de la section de conduite (1) disposée en amont du soufflet métallique (11),
dans lequel l'obstacle à l'écoulement (6) est réalisé en tant que déflecteur au niveau duquel des dérivés d'urée sont séparés, et dans lequel le déflecteur est doté d'au moins une arête de rupture d'écoulement (8), de telle sorte que des dérivés d'urée sont séparés au niveau du côté aval du déflecteur.

2. Système d'échappement selon la revendication 1,
**caractérisé en ce que**
le dispositif de séparation est réalisé en tant que dispositif de collecte pour des dépôts de dérivés d'urée ou contient un dispositif similaire.

3. Système d'échappement selon l'une quelconque des revendications 1 ou 2, **caractérisé en ce que**
le dispositif de séparation comprend une structure de type filtre avec une surface plus grande et/ou avec des ouvertures ou des canaux destinés à l'admission d'urée et de dérivés d'urée.

4. Système d'échappement selon la revendication 3,
**caractérisé en ce que**
la structure de type filtre est formée par le biais d'au moins un ressort de pressage de fil (9) au d'au moins un coussin en fil.

5. Système d'échappement selon l'une quelconque des revendications 3 ou 4, **caractérisé en ce que**
l'obstacle à l'écoulement (6) est combiné à la structure de type filtre (9).
